## Europäisches Patentamt

## European Patent Office

## Office européen des brevets

(11) Veröffentlichungsnummer : **0 028 398**
**B1**

(12) **EUROPÄISCHE PATENTSCHRIFT**

(45) Veröffentlichungstag der Patentschrift :
01.06.83

(51) Int. Cl.³ : **A 61 C 19/04**, G 01 D 5/18,
G 01 R 33/06

(21) Anmeldenummer : **80106652.3**

(22) Anmeldetag : **29.10.80**

(54) **Einrichtung zur Messung des Ortes, der Lage und/oder einer Orts- bzw. Lageänderung des Unterkiefers eines Patienten.**

(30) Priorität : **03.11.79 DE 2944489**

(43) Veröffentlichungstag der Anmeldung :
**13.05.81 Patentblatt 81/19**

(45) Bekanntmachung des Hinweises auf die Patenterteilung : **01.06.83 Patentblatt 83/22**

(84) Benannte Vertragsstaaten :
**FR GB IT**

(56) Entgegenhaltungen :
**DE A 2 715 106**
**DE A 2 814 551**

(73) Patentinhaber : **SIEMENS AKTIENGESELLSCHAFT**
**Berlin und München Wittelsbacherplatz 2**
**D-8000 München 2 (DE)**

(72) Erfinder : **Lewin, Arthur, Prof. Dr.**
**P.O. Box 51 152**
**Saxonwold, T.V.L. (ZA)**
Erfinder : **Nickel, Bernd, Dipl.-Ing.**
**Goldregenstrasse 2**
**D-6143 Lorsch (DE)**

Jouve, 18, rue St-Denis, 75001 Paris, France

## Einrichtung zur Messung des Ortes, der Lage und/oder einer Orts- bzw. Lageänderung des Unterkiefers eines Patienten

Die Erfindung bezieht sich auf eine Einrichtung zur Messung des Ortes, der Lage und/oder einer Orts- bzw. Lageänderung des Unterkiefers eines Patienten in einem ostsfesten Koordinatensystem unter Verwendung eines an einem Meßpunkt angebrachten Felderzeugers, vorzugsweise eines Magnetfelderzeugers, im Abstand davon angeordneten Feldflußaufnehmern, sowie mit einer elektronischen Einrichtung zur dreidimensionalen Erfassung und Auswertung von bei einem Feldfluß bzw. einer Feldflußänderung entstehenden elektrischen Signalen.

Eine derartige Einrichtung ist in der deutschen Patentanmeldung P 28 14 551.9 beschrieben. Die mit der dort aufgezeigten Einrichtung gewonnen Signale erfassen jedoch nur einen Punkt des Unterkiefers, nämlich den Meßpunkt, an dem der Felderzeuger befestigt ist. Die hieraus gewonnenen Signale ($x_1$, $y_1$, $z_1$) entsprechen also den Koordinaten dieses einen Punktes am Unterkiefer. Zusätzlich werden mit dieser Einrichtung Informationen über eine Rotationsbewegung ($\alpha$, $\beta$, $\gamma$) um die Koordinatenachsen X, Y, Z gewonnen.

Die Darstellung eines Punktes des Unterkiefers vermittelt keine Aussage über die Lage und den Bewegungsablauf des gesamten Unterkiefers.

Aufgabe der Erfindung ist es, eine verbesserte Einrichtung anzugeben, insbesondere mit dem Ziel, nicht nur einen Punkt, sondern beliebig viele Punkte des Unterkiefers hinsichtlich der Lage, des Ortes und des Bewegungsverlaufes erfassen und aufzeichnen zu können.

Die gestellte Aufgabe wird erfindungsgemäß dadurch erzielt, daß Mittel zur Erfassung der geometrischen Lage beliebiger Punkte des Unterkiefers bezüglich eines dem Unterkiefer zugeordneten, körperfesten, Koordinatensystems, dessen Ursprung und Rotationszentrum der Meßpunkt ist, vorhanden sind, daß ein Koordinatentransformer vorhanden ist, der die unterkieferbezogenen Koordinaten in die Koordinaten des ortsfesten Koordinatensystems umrechnet, und daß Summierverstärker vorhanden sind, welche die Korrekturgrößen der kieferbezogenen Koordinaten zu den Koordinaten des Meßpunktes addieren.

Vorteilhafte Ausgestaltungen und Weiterbildungen der Erfindung sind in den Unteransprüchen enthalten. Ein Ausführungsbeispiel der Erfindung wird nachfolgend anhand der Zeichnung näher erläutert. Es zeigen :

Figur 1   eine perspektivische Darstellung eines Unterkiefers in einem Koordinatsystem,

Figur 2   eine Prinzipdarstellung zur Erläuterung der Koordinatenbeziehungen,

Figur 3   ein Kieferabdruckmodell in schaubildlicher Darstellung,

Figur 4   ein Blockschaltbild zur Berechnung und Auswertung der Koordinaten,

Figuren 5 und 6   zwei mögliche Bildschirmdarstellungen.

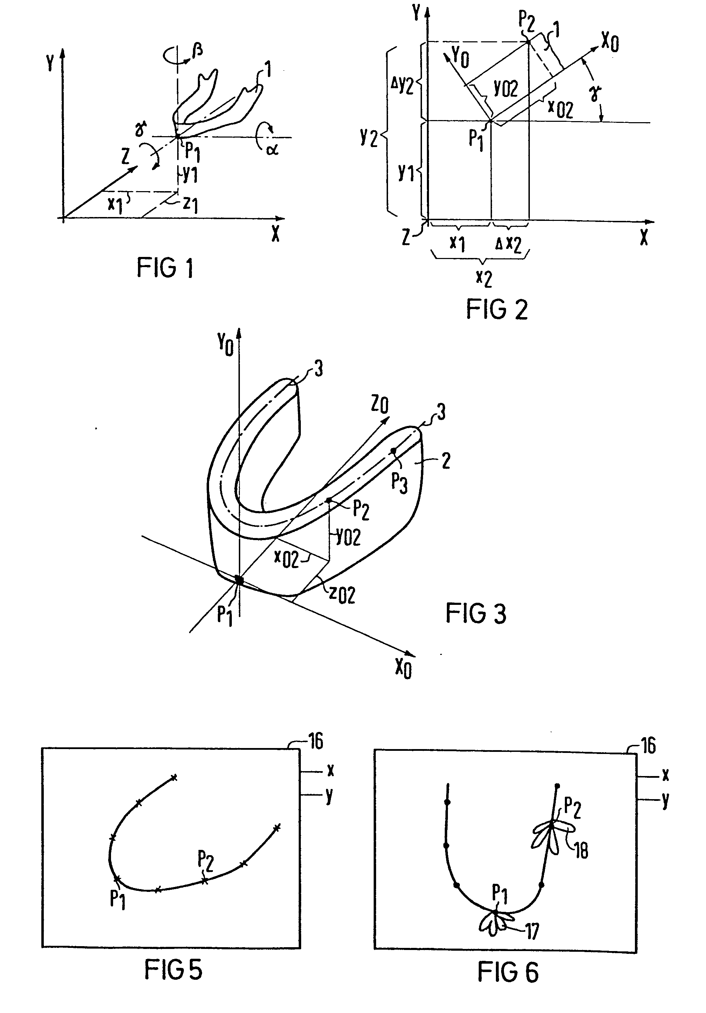

Anhand der Fig. 1 wird die Relation des Meßpunktes an dem der Felderzeuger (Magnetfelderzeuger) befestigt ist zu den Flußaufnehmern erläutert. Der Meßpunkt an dem sich der Felderzeuger befindet ist mit $P_1$ bezeichnet. Der Meßpunkt $P_1$ liegt durch die Anordnung des Felderzeugers fest und bewegt sich mit dem mit 1 bezeichneten Unterkiefer. Für die weitere Betrachtung wird $P_1$ als im Rotationszentrum der Rotationen $\alpha$, $\beta$, $\gamma$ angesehen. Die Koordinaten des Meßpunktes $P_1$ vom Koordinatennullpunkt sind mit $x_1$, $y_1$ und $z_1$, bezeichnet. Die Koordinatenwerte $x_1$, $y_1$, $z_1$ sowie die Rotationsinformationen aus $\alpha$, $\beta$, $\gamma$ werden aus der in der obengenannten Patentanmeldung beschriebenen Einrichtung geliefert. Fig. 2 gibt die Koordinatenbeziehung schematisiert für die X-Y-Ebene wieder. Die Z-Achse steht senkrecht zur Zeichenebene.

Mit $P_2$ ist ein beliebig am Unterkiefer 1 wählbarer Punkt bezeichnet, der zusammen mit weiteren Punkten ($P_3$ ... $P_n$) bildlich dargestellt werden soll. In der Darstellung ist angenommen, daß der Unterkiefer 1 um eine zur Z-Achse parallele, durch $P_1$ gehende Achse um den Winkel $\gamma$ gedreht ist. Dem Unterkiefer 1 wird ein körperfestes Koordinatensystem $X_0$, $Y_0$ und $Z_0$ zugeordnet ; der Punkt $P_2$ hat in Bezug auf dieses (kieferbezogene) Koordinatensystem die Koordination $x_{02}$, $y_{02}$. Unter Ausschaltung einer Rotation um den Winkel $\gamma$ hat der Punkt $P_2$ in Bezug auf das Koordinatensystem X, Y die Koordinaten $x_1 + x_{02}$ bzw. $y_1 + y_{02}$. Mit der in Fig. 2 dargestellten Rotation um den Winkel $\gamma$ ergeben sich in Bezug auf das ortsfeste Koordinatensystem X, Y für den Punkt $P_2$ die Korrekturgrößen $\Delta x$ und $\Delta y$. Entsprechendes gilt für die Z-Achse. Das körperfeste Koordinatensystem $X_0$, $Y_0$ (und gegebenenfalls $Z_0$) dient dazu, zusammen mit dem Winkel $\gamma$ die relative Lage des Punktes $P_2$ zu $P_1$ im ortsfesten Koordinatensystem X, Y festzulegen. Bei der in Fig. 2 dargestellten Anordnung erfolgt eine Rotationsbewegung des Unterkiefers 1 um eine Achse parallel zur Z-Achse durch den Punkt $P_1$. Zur Ermittlung der neuen Koordinaten sind hierzu die Korrekturgrößen $\Delta x_2$, $\Delta y_2$, $\Delta z_2$ zu verwenden. Diese Korrekturgrößen werden zusammen mit den gemessenen Werten $x_1$, $Y_1$ und $z_1$ entsprechend der Formel :

$$x_2 = x_{02} \cdot \cos \gamma - y_{02} \cdot \sin \gamma$$

$$y_2 = x_{02} \cdot \sin \gamma + y_{02} \cdot \cos \gamma$$

errechnet.

Für $\Delta z_2$ ergibt sich eine Auswertung entsprechend dem nachfolgenden Blockschaltbild.

Für den Punkt $P_2$ ergeben sich bezüglich des ortsfesten Koordinatensystems X, Y, Z:

$$x_2 = x_1 + \Delta x = x_1 + x_{02} \cdot \cos \gamma - y_{02} \cdot \sin \gamma$$

$$y_2 = y_1 + \Delta y = y_1 + x_{02} \cdot \sin \gamma + y_{02} \cdot \cos \gamma.$$

Die Fig. 3 zeigt in einer schaubildlichen Darstellung ein Kieferabdruckmodell 2 mit dem Meßpunkt $P_1$ in dem sich der Magnetfelderzeuger befindet. Es sei angenommen, daß die abzubildenden Punkte $P_2$, $P_3$ ... $P_n$ sich auf einer mit 3 bezeichneten Mittellinie befinden sollen. Der Punkt $P_2$ hat die Koordinatenwerte $x_{02}$, $y_{02}$ und $z_{02}$. Diese Koordinaten werden durch geeignete Meßeinrichtungen abgenommen.

Anstelle eines Abdruckmodelles kann auch ein Röntgenfilmbild verwendet werden, welches je nach der darzustellenden Punkte eine Vorder-, Seiten- oder Draufsicht des Kiefers sein kann. Die abzubildenden Punkte können entweder mit Hilfe von geeigneten Rastereinrichtungen (Millimeterpapier) oder mit Hilfe optoelektronischer Abtasteinrichtungen abgenommen werden.

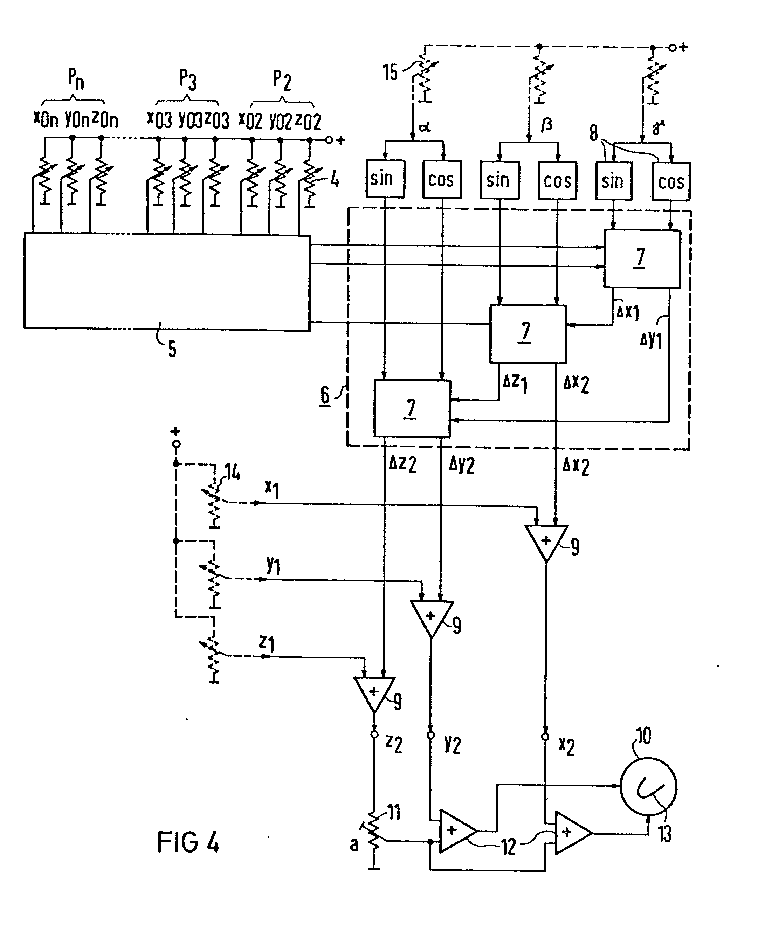

Anhand der Fig. 4 wird die Signalauswertung näher erläutert. Die von den abzubildenden Punkten $P_2$, $P_3$ ... $P_n$ nach den ausgemessenen Werten $x_{02}$, $y_{02}$, $z_{02}$ ... werden in Analogspeicher 4 eingegeben. In einer Multiplexschaltung 5 werden die Signale nacheinander an einen mit 6 bezeichneten Koordinatentransformator weitergegeben. Der Koordinatentransformator 6 enthält für jede Rotation je einen internen zweidimensionalen Koordinatentransformator 7. Die Rotationssignale $\alpha$, $\beta$, $\gamma$ werden jeweils einem Sinus- und Cosinus-Konverter 8 zugeführt, der das entsprechende Sinus- bzw. Cosinussignal an die internen Koordinatentransformatoren weitergibt. Am Ausgang des Koordinatentransformators 6 werden die vollständigen Korrekturgrößen $\Delta x_2$, $\Delta y_2$, $\Delta z_2$ des kieferbezogenen Koordinatensystems $X_0$, $Y_0$, $Z_0$ bereitgestellt. Diese Signale werden in nachfolgenden Additionsverstärkern 9 mit den gemessenen Koordinaten $x_1$, $y_1$, $z_1$ des Meßpunktes $P_1$ addiert. Am Ausgang werden die Koordinaten des Punktes $P_2$, $P_3$ ... $P_n$ bezüglich des ortsfesten Koordinatensystems X, Y, Z erhalten.

Für eine perspektivische Darstellung auf einem (zweidimensionalen) Monitor 10 wird das Signal $z_2$ mittels eines Potentiometers 11 mit dem Faktor a bewertet. In der Regel beträgt dieser Faktor bei perspektivischer Darstellung 0,5. Das Ausgangssignal der Additionsverstärker 9 wird mit den Signalen $x_2$, $y_2$ in weiteren Additionsverstärkern 12 verarbeitet und dem Monitor 10 zugeführt, an dem dann die mit 13 bezeichnete Kieferkonfiguration dargestellt und deren Bewegung beobachtet werden kann.

Für n darzustellende Punkte ($P_2$, $P_3$ ... $P_n$) sind entsprechend 3-n Analogspeicher 4 vorzusehen, die dann der Multiplexeinrichtung 5 mit einer bestimmten Frequenz in der Größenordnung von 1 bis 5 kHz geschaltet werden. Die im Vergleich zum Bewegungsablauf hohe Schaltfrequenz in diesem Bereich hat den Vorteil, daß die Bewegung der Punkte auf dem Monitor 10 praktisch simultan erfolgen.

Für Schulungszwecke ist es vorteilhaft den Meßpunkt $P_1$ zu simulieren indem man die Koordinaten $x_1$, $y_1$, $z_1$ und $\alpha$, $\beta$, $\gamma$ durch in der Darstellung nach Fig. 4 gestrichelt eingezeichneten Analogwertgeber 14 bzw. 15 ersetzt. Mit Hilfe dieser Simuliereinrichtung kann der Einfluß eines einzigen Meßwertes des Meßpunktes $P_1$ auf die Bewegung der anderen Kieferpunkte $P_2$, $P_3$ ... $P_n$ beobachtet werden.

Die Fig. 5 zeigt eine perspektivische Darstellung des Unterkiefermodells in zweidimensionaler Ebene auf einem Monitor 16 mit einem X-Y-Eingang.

Die Fig. 6 zeigt eine Darstellung des Unterkiefermodells in der Draufsicht, also in der X-Z-Ebene und zeigt einen möglichen Bewegungsverlauf für die Punkte $P_1$ und $P_2$ in einer senkrecht dazu stehenden Ebene z. B. in der X-Y-Ebene. Die sich hieraus ergebenden Kaubewegungsmuster (4 Bewegungszyklen) für die Punkte $P_1$ und $P_2$ sind mit 17 bzw. 18 bezeichnet.

**Ansprüche**

1. Einrichtung zur Messung des Ortes, der Lage und/oder einer Orts- bzw. Lageänderung des Unterkiefers eines Patienten in einem ortsfesten Koordinatensystem (x, y, z) unter Verwendung eines an einem Meßpunkt ($P_1$) angebrachten Felderzeugers, vorzugsweise eines Magnetfelderzeugers, im Abstand davon angeordneten Feldflußaufnehmern, sowie mit einer elektronischen Einrichtung zur dreidimensionalen Erfassung und Auswertung von bei einem Feldfluß bzw. einer Feldflußänderung entstehenden elektrischen Signalen, dadurch gekennzeichnet, daß Mittel zur Erfassung der geometrischen Lage beliebiger Punkte ($P_2$ ... $P_n$) des Unterkiefers (1) bezüglich eines dem Unterkiefer zugeordneten, körperfesten, Koordinatensystems. ($X_0$, $Y_0$, $Z_0$), dessen Ursprung und Rotationszentrum der Meßpunkt ($P_1$) ist, vorhanden sind, daß ein Koordinatentransformator (6) vorhanden ist, der die unterkieferbezogenen Koordinaten ($x_0$, $y_0$, $z_0$) in die Koordinaten ($x_2$, $y_2$, $z_2$) des ortsfesten Koordinatensystems (X, Y, Z) umrechnet, und daß Additionsverstärker (9) vorhanden sind, welche die Korrekturgrößen ($\Delta x_2$, $\Delta y_2$, $\Delta z_2$) der kieferbezogenen Koordinaten zu den Koordinaten ($x_1$, $y_1$, $z_1$) des Meßpunktes ($P_1$) addieren.

2. Einrichtung nach Anspruch 1, dadurch gekennzeichnet, daß als Mittel zur Erfassung der geometrischen Lage ein Kieferabdruckmodell (2) verwendet ist, an dem die Koordinaten ($x_{02}$ ... $x_{0n}$, $y_{02}$ ... $y_{0n}$, $z_{02}$ ... $z_{0n}$) der darzustellenden Punkte ($P_2$ ... $P_n$) abgenommen werden.

3. Einrichtung nach Anspruch 1, dadurch gekennzeichnet, daß als Mittel zur Erfassung der geometrischen Lage ein Röntgenbild des Unterkiefers (1) verwendet ist, an dem die Koordinaten der darzustellenden Punkte ($P_2$ ... $P_n$) abgenommen werden.

4. Einrichtung nach Anspruch 3, dadurch gekennzeichnet, daß die Abnahme der Koordinaten mit Hilfe eines opto-elektronischen Abtasters erfolgt.

5. Einrichtung nach einem der Ansprüche 1 bis 4, dadurch gekennzeichnet, daß als Mittel Analogspeicher (4) vorhanden sind, welche die körperfesten Koordinaten ($x_{02}$, $y_{02}$, $z_{02}$) als Analogwerte speichern.

6. Einrichtung nach Anspruch 5, dadurch gekennzeichnet, daß die Analogwerte ($x_{02}$, $y_{02}$, $z_{02}$) und die vorhandenen Winkelgrößen ($\alpha$, $\beta$, $\gamma$) in einen an sich bekannten Koordinatentransformator (6) eingegeben werden, an dessen Ausgang die Korrekturgrößen ($\Delta x_2$, $\Delta y_2$, $\Delta z_2$) abgenommen werden.

7. Einrichtung nach Anspruch 6, dadurch gekennzeichnet, daß für eine Anzahl n darzustellende Punkte ($P_2$ ... $P_n$) eine Anzahl $3 \times n$ Analogspeicher (4) vorhanden sind, daß eine Multiplexeinrichtung (5) vorhanden ist, welche die Koordinatensignale ($x_{02}$ ... $x_{0n}$, $y_{02}$ ... $y_{0n}$, $z_{02}$ ... $z_{0n}$) wechselweise an die entsprechenden Eingänge des Koordinatentransformators (6) schaltet.

8. Einrichtung nach einem der Ansprüche 1 bis 7, dadurch gekennzeichnet, daß zur Erzielung einer perspektivischen Darstellung auf einem (zweidimensionalen) Monitor (10) ein Korrekturglied (Potentiometer 11) vorhanden ist, das die perspektivische Verzerrung der senkrecht zur Bildschirmoberfläche stehenden Koordinaten (z) mit einem Korrekturfaktor (a) berücksichtigt.

9. Einrichtung nach einem der Ansprüche 1 bis 8, dadurch gekennzeichnet, daß die darzustellenden Punkte ($P_1$ ... $P_n$) auf dem Monitor (16) in einer Ebene (z. B. X-Z-Ebene in Fig. 3) positioniert werden, der Bewegungsablauf dagegen in einer anderen Ebene (z. B. X-Y-Ebene) dargestellt wird (Fig. 6).

10. Einrichtung nach einem der Ansprüche 1 bis 9, dadurch gekennzeichnet, daß anstelle der Koordinaten ($x_1$, $y_1$, $z_1$, $\alpha$, $\beta$, $\gamma$) des Meßpunktes ($P_1$) Analogwertgeber (14, 15) vorhanden sind, mit Hilfe derer die Bewegung des Meßpunktes ($P_1$) simuliert werden kann.

## Claims

1. A device for measuring the location, orientation and/or any change in the location or orientation of the lower jaw of a patient, as the case may be, employing a field generator arranged at a measurement point (P1), preferably a magnetic field generator, field flux receivers arranged at an interval therefrom, and further comprising an electrical device for the three-dimensional detection and analysis of electrical signals produced by an existing field flux or by a change in field flux, characterised in that means are provided, attached to the body, for detecting the geometric position of arbitrary points ($P_2$ ... $P_n$) of the lower jaw (1) relative to a co-ordinate system ($X_0$, $Y_0$, $Z_0$) assigned to the lower jaw, whose origin and rotation centre represents the measurement point ($P_1$), a co-ordinate transformer (6) being provided which converts the jaw-related co-ordinates ($x_0$, $y_0$, $z_0$) into the co-ordinates ($x_2$, $y_2$, $z_2$) of the stationary co-ordinate system (X, Y, Z), and that summing amplifiers (9) are provided which add the correction values ($\Delta x_2$, $\Delta y_2$, $\Delta z_2$) of the jaw-related co-ordinates to the co-ordinates ($x_1$, $y_1$, $z_1$) of the measurement point ($P_1$).

2. A device as claimed in Claim 1, characterised in that the means which serve to detect the geometric position consist of a jaw impression model (2) from which the co-ordinates ($x_{02}$ ... $x_{0n}$, $y_{02}$ ... $y_{0n}$, $z_{02}$ ... $z_{0n}$) of the points ($P_2$ ... $P_n$) to be represented are obtained.

3. A device as claimed in Claim 1, characterised in that the means which serve to detect the geometric position consist of a X-ray picture of the lower jaw (1) from which the co-ordinates of the points ($P_2$ ... $P_n$) to be represented are obtained.

4. A device as claimed in Claim 3, characterised in that the co-ordinates are obtained by use of an optoelectronic scanner.

5. A device as claimed in one of Claims 1 to 4, characterised in that the means consist of analogue stores (4) which store in the form of analogue values the body-fixed co-ordinates ($x_{02}$, $y_{02}$, $z_{02}$).

6. A device as claimed in Claim 5, characterised in that the analogue values ($x_{02}$, $y_{02}$, $z_{02}$) and the existing angular values ($\alpha$, $\beta$, $\gamma$) are input into a co-ordinate transformer (6) known *per se* and from the output of which the correction values ($\Delta x_2$, $\Delta y_2$, $\Delta z_2$) are obtained.

7. A device as claimed in Claim 6, characterised in that for a number n of points ($P_2$ ... $P_n$) to be represented a number $3 \times n$ of analogue stores (4) is provided, a multiplex device (5) alternately connecting co-ordinate signals ($x_{02}$ ... $x_{0n}$, $y_{02}$ ... $y_{0n}$, $z_{02}$ ... $z_{0n}$) to the corresponding inputs of the co-ordinate transformer (6).

8. A device as claimed in one of Claims 1 to 7, characterised in that a perspective representation is obtained on a (two-dimensional) monitor (10) by providing a correcting device (potentiometer 11) which takes into account the perspective distortion of the co-ordinates (z) at right angles to the screen surface using a correction factor (a).

9. A device as claimed in one of the Claims 1 to 8, characterised in that the points ($P_1$ ... $P_n$) to be represented are positioned on the monitor (16) in one plane (e. g. X-Z-plane in Figure 3), whereas the movement curve is represented in another plane (e. g. X-Y-plane) (Fig. 6).

10. A device as claimed in one of the Claims 1 to 9, characterised in that the co-ordinates ($x_1$, $y_1$, $z_1$,

4

$\alpha$, $\beta$, $\gamma$) of the measurement point ($P_1$) are replaced by analogue value generators (14, 15) which permit simulation of the movement of the measurement point ($P_1$).

## Revendications

1. Dispositif pour mesurer l'emplacement, la position et/ou une modification d'un emplacement ou de la position de la mâchoire inférieure d'un patient dans un système fixe de coordonnées (x, y, z) avec mise en œuvre d'un générateur de champ disposé en un point de mesure (P1), de préférence d'un générateur de champ magnétique, à une distance de ce dernier des récepteurs du flux magnétique, ainsi qu'avec un dispositif électronique pour la saisie et l'évaluation tridimensionnelle de signaux électriques qui se forment par un flux de champ ou une modification du flux du champ, caractérisé par le fait qu'il est prévu des moyens pour saisir la position géométrique de points quelconques ($P_2$ ... $P_n$) de la mâchoire inférieure (1) par rapport à un système de coordonnées ($X_0$, $Y_0$, $Z_0$) associé à la mâchoire et solidaire du corps, et dont l'origine et le centre de rotation sont constitués par le point de mesure ($P_1$), qu'il est prévu un transformateur de coordonnées (6) qui convertit les coordonnées ($x_0$, $y_0$, $z_0$) rapportées à la mâchoire inférieure en les coordonnées ($x_2$, $y_2$, $z_2$) du système de coordonnées fixe (X, Y, Z), et qu'il est prévu des amplificateurs d'addition (9) qui additionnent les grandeurs de correction ($\Delta x_2$, $\Delta y_2$, $\Delta z_2$) des coordonnées rapportées à la mâchoire aux coordonnées ($x_1$, $y_1$, $z_1$) du point de mesure ($P_1$).

2. Dispositif selon la revendication 1, caractérisé par le fait que l'on utilise, comme moyens pour saisir la position géométrique, un modèle d'empreinte de la mâchoire (2), modèle au niveau duquel on prélève les coordonnées ($x_{02}$ ... $x_{0n}$, $y_{02}$ ... $y_{0n}$, $z_{02}$ ... $z_{0n}$) des points ($P_2$ ... $P_n$) à représenter.

3. Dispositif selon la revendication 1, caractérisé par le fait que l'on utilise, comme moyens pour saisir la position géométrique, une image radiologique de la mâchoire inférieure (1), au niveau de laquelle sont prélevées les coordonnées des points ($P_2$ ... $P_n$) à représenter.

4. Dispositif selon la revendication 3, caractérisé par le fait que le prélèvement des coordonnées a lieu à l'aide d'un détecteur optoélectronique.

5. Dispositif selon l'une des revendications 1 à 4, caractérisé par le fait que l'on utilise comme moyens des mémoires analogiques (4) qui mémorisent les coordonnées solidaires du corps ($x_{02}$, $y_{02}$, $z_{02}$) comme valeurs analogiques.

6. Dispositif selon la revendication 5, caractérisé par le fait que les valeurs analogiques ($x_{02}$, $y_{02}$, $z_{02}$) et les grandeurs angulaires qui existent ($\alpha$, $\beta$, $\gamma$) sont introduites dans un transformateur de coordonnées connu (6) à la sortie duquel sont prélevées les grandeurs de correction ($\Delta x_2$, $\Delta y_2$, $\Delta z_2$).

7. Dispositif selon la revendication 6, caractérisé par le fait que pour un nombre n de points ($P_2$ ... $P_n$) à représenter, on met en œuvre un nombre $3 \times n$ de mémoires analogiques (4), qu'il est prévu un dispositif de multiplexage (5) qui commute les signaux des coordonnées ($x_{02}$ ... $x_{0n}$, $y_{02}$ ... $y_{0n}$, $z_{02}$ ... $z_{0n}$) alternativement aux entrées correspondantes du transformateur de coordonnées (6).

8. Dispositif selon l'une des revendications 1 à 7, caractérisé par le fait que pour obtenir une représentation en perspective sur un moniteur (bidimensionnel) (10), on utilise un élément de correction (potentiomètre 11) qui tient compte de la déformation, en perspective, des coordonnées (z) représentées perpendiculairement à la surface de l'écran d'image, avec un facteur de correction (a).

9. Dispositif selon l'une des revendications 1 à 8, caractérisé par le fait que les points représentés ($P_1$ ... $P_n$) sont positionnés sur un moniteur (16), dans un plan (par exemple plan X-Z dans la figure 3), alors que le déroulement du mouvement est représenté dans un autre plan (par exemple plan X-Y).

10. Dispositif selon l'une des revendications 1 à 9, caractérisé par le fait qu'à la place des coordonnées ($x_1$, $y_1$, $z_1$, $\alpha$, $\beta$, $\gamma$) du point de mesure ($P_1$), on utilise des générateurs de valeurs analogiques (14, 15) à l'aide desquels on peut simuler le mouvement du point de mesure ($P_1$).

FIG 1

FIG 2

FIG 3

FIG 5

FIG 6

FIG 4